# EUROPEAN PATENT APPLICATION

(11) **EP 4 485 839 A1**
(43) Date of publication of application: **01.01.2025**
(21) Application number: 23208416.0
(22) Date of filing: 08.11.2023
(51) Int. Cl.: H04L 9/00, H04L 65/1069

(54) **SYSTEMS AND METHODS FOR PERFORMING OUT-OF-BAND AUTHENTICATION, VALIDATION AND RECONCILIATION**

(30) Priority: 30.06.2023 US 202318345781
(71) Applicant: Levi, Dinor Adam Vestergaard, 08007 Barcelona (ES)
(72) Inventor: Levi, Dinor Adam Vestergaard, 08007 Barcelona (ES)
(74) Representative: Morrall, Jonathan Ian McLachlan

(57) **Abstract**

Systems and methods are provided for performing out-of-band authentication, validation, and reconciliation of telecommunications services.

## Description

### BACKGROUND OF THE DISCLOSURE

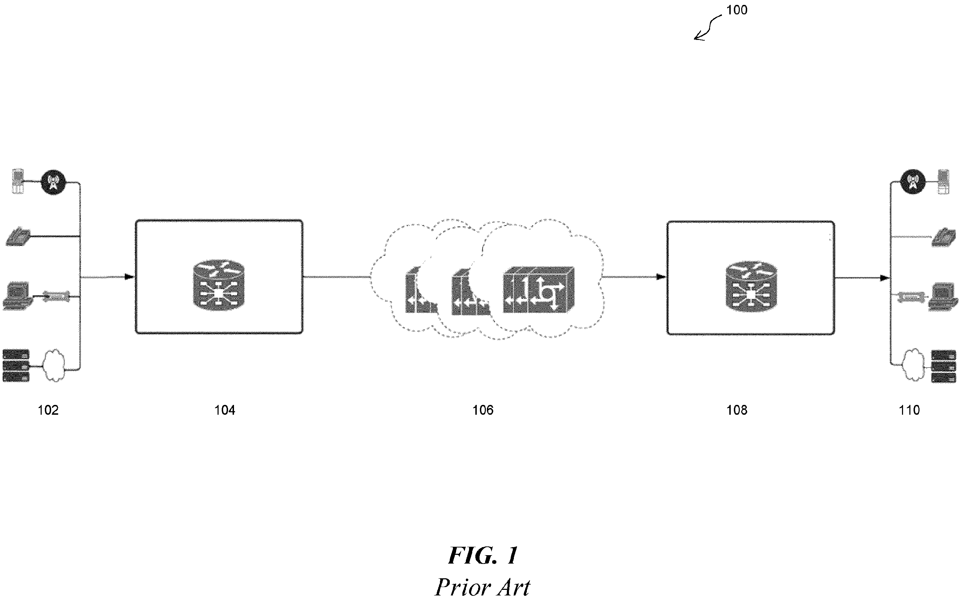

The telecommunications industry facilitates and operates with the transmission of numerous types of services (i.e., traffic), such as voice, messaging, video, and other types of digital mediums. To manage such traffic, the telecommunications industry generally utilizes a supply chain structure similar to or the same as the structure 100 shown in FIG. 1. For example, as an initial origination 102, a customer can request service for a phone call, video call or text messaging such as from a mobile phone, a computer, or other device known in the industry. Then, an origin operator network 104 (e.g., AT&T^{™}, Verizon^{™}, etc.) receives request for service delivery of the digital medium. Next, one or more intermediaries 106 (e.g., resellers) facilitate the transfer of the digital medium from the origin operator network 104 to a termination operator network 108 (e.g., an end supplier such as Telefonica Spain). Once the termination operator 108 receives the digital medium, it can deliver it to the destined end user: final destination 110. Similar to the initial origination 102, the final destination 110 can include various devices capable of receiving the digital medium (or other transmission), such as a mobile phone, landline, computer, etc.

### BRIEF DESCRIPTION OF THE FIGURES

FIG. 1 is a diagram of a typical telecommunications industry supply chain structure.
FIG. 2 is a diagram of a telecommunications industry supply chain structure that employs out-of-band validation and reconciliation techniques according to example embodiments of the present disclosure.
FIGS. 3A-3C are block diagrams of example blockchain node configurations according to example embodiments of the present disclosure.
FIG. 4A is a flowchart of an example process for validating an end service provider according to example embodiments of the present disclosure.
FIG. 4B is a flowchart of an additional example process for validating an end service provider according to example embodiments of the present disclosure.
FIG. 4C is an example illustration of how the processes of FIGS. 4A and 4B are performed within the system of FIG. 2 according to example embodiments of the present disclosure.
FIG. 5A is a flowchart of an example process for commencing service according to example embodiments of the present disclosure.
FIG. 5B is an example illustration of how the process of FIG. 5A is performed within the system of FIG. 2 according to example embodiments of the present disclosure.
FIG. 5C is a flowchart of an additional example process for commencing service according to example embodiments of the present disclosure.
FIG. 5D is an example illustration of how the process of FIG. 5C is performed within the system of FIG. 2 according to example embodiments of the present disclosure.
FIG. 6A is a flowchart of an example process for ending service from a final destination according to example embodiments of the present disclosure.
FIG. 6B is an example illustration of how the process of FIG. 6A is performed within the system of FIG. 2 according to example embodiments of the present disclosure.
FIG. 6C is a flowchart of an additional example process for ending service from a final destination according to example embodiments of the present disclosure.
FIG. 6D is an example illustration of how the process of FIG. 6C is performed within the system of FIG. 2 according to example embodiments of the present disclosure.
FIG. 7A is a flowchart of an example process for ending service according to example embodiments of the present disclosure.
FIG. 7B is an example illustration of how the process of FIG. 7A is performed within the system of FIG. 2 according to example embodiments of the present disclosure.
FIGS. 7C-7D are flowcharts of additional example processes for ending service from a final destination according to example embodiments of the present disclosure.
FIG. 7E is an example illustration of how the processes of FIGS. 7C and 7D are performed within the system of FIG. 2 according to example embodiments of the present disclosure.
FIG. 8A is a flowchart of an example process for verifying an origin identity according to example embodiments of the present disclosure.
FIG. 8B is an example illustration of how the process of FIG. 8A is performed within the system of FIG. 2 according to example embodiments of the present disclosure.
FIGS. 8C-8D are flowcharts of additional example processes for verifying an origin identity according to example embodiments of the present disclosure.
FIG. 8E is an example illustration of how the processes of FIGS. 8C and 8D are performed within the system of FIG. 2 according to example embodiments of the present disclosure.
FIG. 9A is a flowchart of an example process for an intermediary joining a contract according to example embodiments of the present disclosure.
FIGS. 9B-9D are example illustrations of how the process of FIG. 9A is performed within the system of FIG. 2 according to example embodiments of the present disclosure.
FIG. 10 is an example server device that can be used within the system of FIG. 2 according to an embodiment of the present disclosure.

### DESCRIPTION

The following detailed description is merely exemplary in nature and is not intended to limit the claimed invention or the applications of its use.

Industry deregulation, rapid technology innovation, and explosive market demand have triggered fierce competition in the telecommunications services marketplace, which has polarized the global supply chain. Exponential growth in the number of intermediaries (e.g., intermediaries 106 of FIG. 1) and transmission hops between the original service requestors (initial origination 102) and final service providers (termination operator 108) have bottlenecked transaction reconciliations and financial settlements. In addition, a shrinking profitability margin within the supply chain has escalated service hijacks, bypass, and identity fraud to excessive levels, costing enterprises and operators billions of dollars yearly.

Embodiments of the present disclosure therefore relate to systems and methods for performing out-of-band validation and reconciliation of telecommunications services. The disclosed system utilizes hybrid blockchain technology and allows any entity within the supply chain (e.g., origin operators, resellers/intermediaries, or final service providers) to subscribe to a service that can deliver revenue assurance, fraud prevention, and service level verification within the supply chain. For example, the disclosed systems and methods can provide for the validation of the authenticity of an end-service provider chosen by a service requestor in real-time, which can eliminate false, fraudulent, or deteriorated service delivery. In addition, the disclosed systems and methods can provide for the validation of the authenticity of the service requestor by the end-service provider in real-time. This can eliminate false, manipulated, or fraudulent identities of service requestors. Further, the disclosed systems and methods can provide for the validation and reconciliation of transaction settlements throughout a supply chain in real-time, which can eliminate financial errors, latencies, and fraud. The disclosed system can achieve such benefits by deploying (either on the cloud or physically on premises) a blockchain application programming interface node (referred to as a "blockchain API node" or just "blockchain node" herein) at an origin operator network 104 and/or a termination operator 108.

As described herein, when a transmission is initiated, relayed, or received by a network, the transmission credentials can be wrapped into a "validation request" smart contract and published to a blockchain node, while a HashID can be inserted into the transmission session initiation protocol (SIP) header and sent to either an origin or termination operator network. As the smart contract is received by the blockchain node at a destination and the SIP transmission is received by its network, the blockchain node can query the network for the SIP header HashID insert and verify transmission credentials match with the smart contract. Upon validation (or failed validation), the blockchain node can update the smart contract credentials and publish it on the blockchain, while an updated HashID can be inserted into the transmission SIP header and sent.

The transaction initiator can receive the smart contract validation state on its own blockchain node and the SIP transmission on its own network. If validation is successful, the network can proceed with the transmission. If validation fails, the network can provide an alert, such as to a monitoring agency, and/or terminate the transmission. In some embodiments, any intermediary can join the transaction and have it recorded on the blockchain provided its network presents a valid HashID and matching transmission credentials of the transaction.

It is important to note that, as many types of traffic generally carry similar transmission fundamentals, voice calls are used herein in an exemplary manner, but the disclosed principles are not limited to voice calls and are applicable to many types of transmitted media. For example, the disclosed embodiments can also be used for short message/messaging service (SMS) transmissions. SMS, for example, does not have a continuous transmission state. For this reason, not all processes described herein may be applicable to SMS transmission, as a person of ordinary skill in the art would understand. For example, as SMS transmissions generally utilize short message peer-to-peer (SMPP) instead of SIP protocols, there would not be an SIP Header insert and validation can occur via the SMS credential hash matching between the relevant blockchain nodes.

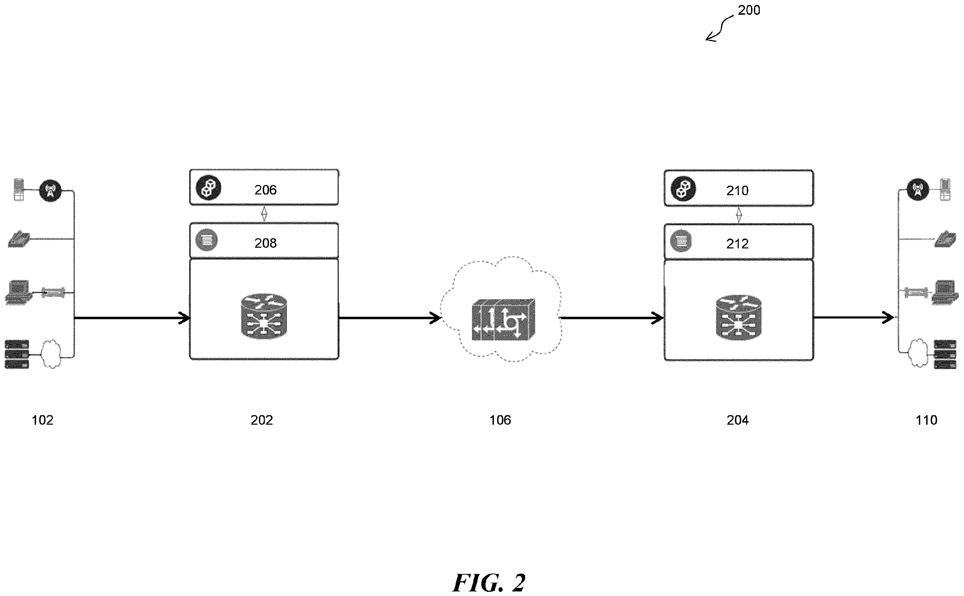

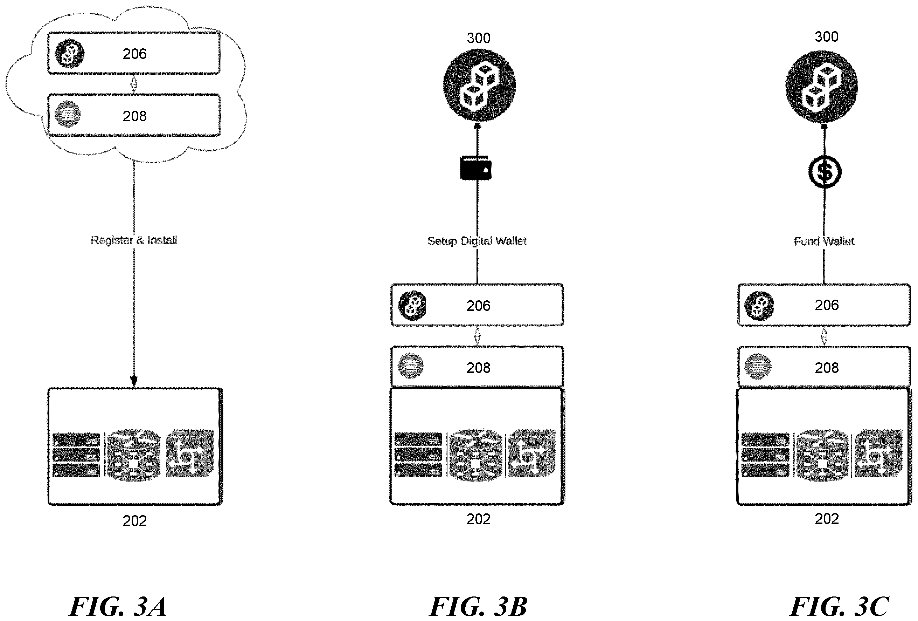

FIG. 2 is a diagram of a telecommunications industry supply chain structure 200 that employs out-of-band validation and reconciliation techniques according to example embodiments of the present disclosure. Structure 200 is similar to the system of structure 100 in that it also includes one or more initial originations 102 (herein referred to individually as an "initial origination 102" or collectively as "initial originations 102"), one or more intermediaries 106, and one or more final destinations 110 (herein referred to individually as a "final destination 110" or collectively as "final destinations 102"). However, the structure 200 also includes an origin operator network 202 and a termination operator network 204, each including at least one of the blockchain nodes described herein. In some embodiments, the origin operator network 202 can include a blockchain node 206 and a signaling log collector 208. In addition, the termination operator network 204 can include a blockchain node 210 and a signaling log collector 212. In some embodiments, the blockchain nodes and the signaling log collectors can be deployed either in a cloud or on premises of the respective networks. In some embodiments, each of the signaling log collectors 208 and 212 can be configured to gather SIP signaling packets sent and received on a predefined port on a network. In some embodiments, the gathering can be performed in real-time. In some embodiments, each of the blockchain nodes 206 and 210 can include an application programming interface (API) that allows the system to interact with a blockchain platform configured to host or otherwise provide access to the blockchain. This can enable access to the data and functionality of a blockchain without having to build separate blockchain platforms. In addition, the blockchain nodes 206 and 210 can further include various applications and programs that operate and perform the disclosed methods. Further details about each component of structure 200, their operations, and their interactions are provided below in the context of FIGS. 3A-8E, for example.

FIGS. 3A-3C are block diagrams of example blockchain node configurations according to example embodiments of the present disclosure. FIGS. 3A-3C show a sequence of registering and/or installing in FIG. 3A, digital wallet setup in FIG. 3B, and digital wallet funding in FIG. 3C. First, in FIG. 3A, the blockchain node 206 and signaling log collector 208 are registered and installed to an origin operator network 202. In FIG. 3B, a digital wallet is setup between the blockchain node 206 and the blockchain 300. In some embodiments, the blockchain 300 can include the Algorand blockchain, although this is not limiting as many blockchain technologies could be interchanged to implement the embodiments described herein, such as Solana and Ethereum 2.0. In some embodiments, a digital wallet can also be referred to as an e-wallet. As described herein, a digital wallet can include any electronic device, online service, or software program that allows a party to make electronic transactions with another party while bartering digital currency units in exchange for goods and/or services. In addition, as described herein, a blockchain can refer to a shared, immutable ledger that facilitates the process of recording transactions and tracking the movement of tangible and intangible assets across a business network. FIG. 3C illustrates how links to funding the digital wallet from the blockchain node 206 can be configured. The diagrams in FIGS. 3A-3C also apply to setting up a blockchain node at a termination operator network 204.

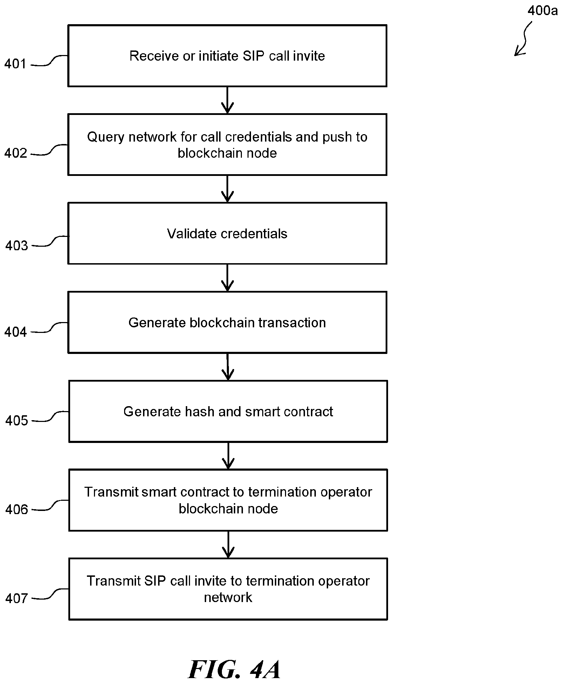

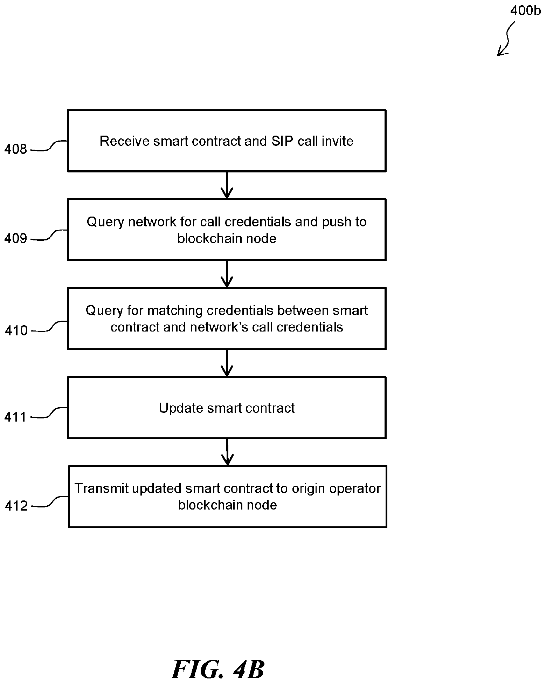

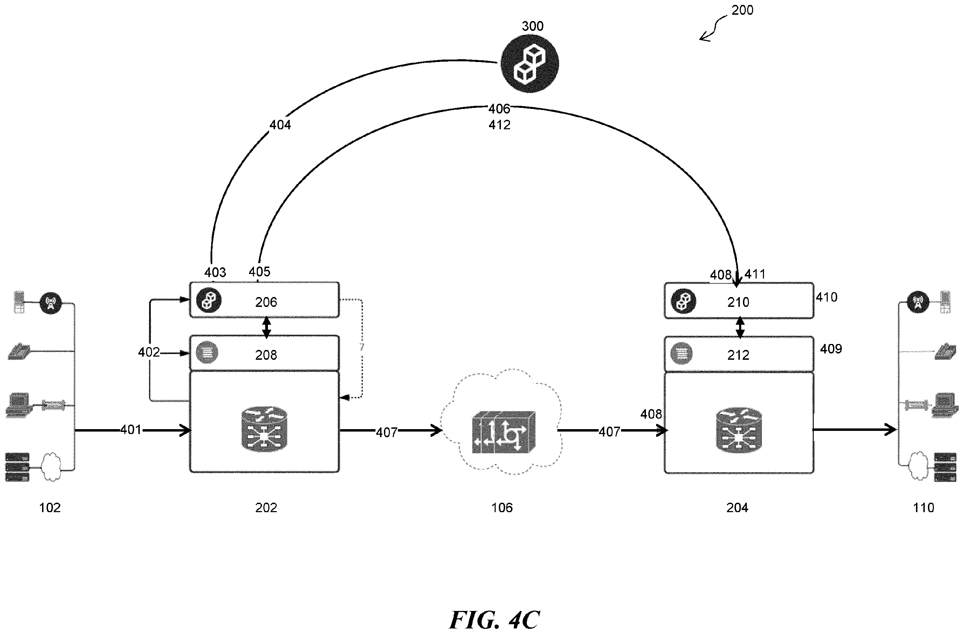

FIG. 4A is a flowchart of an example process 400a for validating an end service provider, and FIG. 4B is a flowchart of an additional example process 400b for validating an end service provider. FIG. 4C is an example illustration of how the processes of FIGS. 4A and 4B are performed within the system of FIG. 2 according to example embodiments of the present disclosure. Processes 400a and 400b are described in detail as follows, while FIG. 4C shows how the actions within processes 400a and 400b relate to the elements of structure 200. In some embodiments, FIGS. 4A-4C are applicable to both voice messages and SMS messages. In the case of SMS transmissions, the SMS is sent and the smart contract is generated for receipt confirmation. In addition, the steps that refer to a Call HashID may only be applicable to voice transmissions.

FIG. 4A is a flowchart of an example process 400a for validating an end service provider according to example embodiments of the present disclosure. For example, process 400a can provide the benefits described herein during a phone call (or other transmission of media) by validating an end service provider, such as the provider associated with the terminator operator network 204. At block 401, the origin operator network 202 can receive or initiate an SIP call invite (generally referred to herein as a "transmission invite") from an initial origination 102. In the depicted example, the call is a SIP call, but it will be understood that other types of communications using other messaging services and/or protocols may be attempted. For example, the dialed number could be "34 606 202 707," which is a Spanish phone number. It is important to note, however, that the disclosed process is not limited to dialing phone numbers of Spain and could be applied to a variety of types of phone numbers or other destination indicators (e.g., IP addresses, messaging service handles, etc.). At block 402, the signaling log collector 208 can query the origin operator network 202 for call credentials (generally referred to herein as "credentials," which are not limited to phone calls), such as the origin phone number, the destination number, the call state time stamp, etc. In addition, the signaling log collector 208 can push this data to the blockchain node 206. In some embodiments, if the origin operator network 202 has the requisite functionality, the origin operator network 202 could alternatively push this data to the blockchain node 206 directly.

At block 403, the blockchain node 206 can validate credentials associated with the SIP call invite. In some embodiments, the blockchain node 206 can validate the number dialed and identify the relevant termination operator networks (i.e., termination operator network 204). For example, the blockchain node 206 can validate that the dialed number is "34 606 202 707," that the destination country is Spain (i.e., 34=Spain), that the number assigned network is Movistar (i.e., 606=Movistar), and that the destination member ID (i.e., wallet ID associated with the termination operator network blockchain node 210) is
"YITAU7IM3HZQJIK2ZVZUFNW3H4TEAVW2ECR3BTYOID7Y7E5HCTBV6LYHI." At block 404, the blockchain node 206 can generate a blockchain transaction for the call. In some embodiments, generating the blockchain transaction can include generating a blockchain transaction ID (i.e., TXN_ID) and linking the ID to the associated wallet ID. For example, the transaction ID could be
"FTFFNH46FBI4UCHD3CPJBCBIRLA5ECMNBQ3AM4LPSJIYUUOHROGQ" and the origin member wallet ID (i.e., wallet ID associated with the origin operator network blockchain node 206) is
"W4SJ7NE7UEYBKMWVNHKVNNEPPVOWNQMN2EVICBR5POGV40PZEU4JQHL5LY. " At block 405, the blockchain node 206 may generate a hash and a smart contract (also referred to as a signature request contract). In some embodiments, the blockchain node 206 can generate a Call HashID based on the dialed number (e.g., 34 606 202 707) and the number of the original caller (e.g., 1 202 555 1212). An example Hashed Call ID could be
"b2b2ab0b45a107bbdea4fc52d66fea736f13bb7d885910407ed4c983e3aa0512." In some embodiments, the smart contract can operate as a validation tool that validates the identity of the requester through a wallet ID signature. An example smart contract that can be generated by the blockchain node 206 is shown below in Table 1:

**Table 1**

| | |
|---|---|
| Transaction ID | FTFFNH46FBI4UCHD3CPJBCBIRLASECMNBQ3AM4LPSJIYUUOHROGQ |
| Call Hash ID | b2b2ab0b45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB (*) | Ez8zrLmfzJXyCO-LN L6aoCo |
| Invite Request signee | W4SJ7NE7UEYBKMWVNHKVNNEPPVOWNQMN2EVICBR5POGV4OPZEU4JQHL5LY |
| Verification Type | (Option - Invite or Connect) |

At block 406, the blockchain node 206 may transmit the smart contract to the blockchain node 210, which may be connected to the termination operator network 204. In some embodiments, the transmission of the smart contract from the blockchain node 206 to the blockchain node 210 is performed "out of band." In other words, the transmission does not go through any of the intermediaries 106. In some embodiments, if the origin operator network 202 has the requisite functionality, the origin operator network 202 can request the Call HashID (generated at block 405) from the blockchain node 206 and insert it into the SIP header of the call invite. As a person of ordinary skill in the art will understand, insertion of a Call HashID into a SIP header is not performed for communications that do not use SIP headers, such as SMS communications. At block 407, the origin operator network 202 may transmit the SIP call invite to the termination operator network 204, traversing any intermediary networks.

FIG. 4B is a flowchart of an additional example process 400b for validating an end service provider according to example embodiments of the present disclosure. At block 408, the blockchain 210 may receive the smart contract from the blockchain node 206, and the termination operator network 204 may receive the SIP call invite from the origin operator network 202. At block 409, signaling log collector 212 may query the call credentials on the termination operator network 204 and push this data to the blockchain node 210. In some embodiments, the call credentials here can include the same information as discussed in relation to block 402 in process 400a. In some embodiments, if the termination operator network 204 includes the requisite functionality, it can push the call credentials directly to the blockchain node 210. At block 410, the blockchain node 210 may query for matching credentials between the received smart contract and the call credentials queried at block 409. In some embodiments, this can include one or more verification layers. For example, a first verification layer can include inserting the Call HashID into the SIP header. If the Call HashID is not present, a second verification layer can include verifying the SIP Call ID. In addition, a third verification layer can include the blockchain node 210 hashing the received dialed and origin numbers on the termination operator network 204 and matching the hash to the Call HashID and the specific call state timestamp of the smart contract. Layers relying on data in the SIP header can be omitted or used within other layers (as may be permitted by the specific digital medium implementation) when verifying data associated with messages that do not use SIP headers, such as SMS messages, as a person of ordinary skill in the art will appreciate.

At block 411, upon matching and validating credentials, the blockchain node 210 can update the smart contract with a Call Invite acknowledgment (ACK). An example of an updated smart contract is shown below in Table 2:

**Table 2**

| | |
|---|---|
| Transaction ID | FTFFNH46FBI4UCHD3CPJBCBIRLASECMNBQ3AM4LPSJIYUUOHROGQ |
| Call Hash ID | b2b2ab0b45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB | Ez8zrLmfzJXyCO-LN L6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID - IB | isbcrcpi2pbymaclztdtzzpbpmd2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |

In some embodiments, if no match is found within the transaction timer limit, as defined by the blockchain node 210, from the time the contract has been received, the blockchain node 210 can update the smart contract with a Failed ACK, an example of which is shown below in Table 3:

**Table 3**

| | |
|---|---|
| Invite ACK SIP Timestamp | 0 |
| SIP Call ID - IB | 0 |
| Invite ACK signee | YITAU7IM3HZQJIK2ZVZUFNW3H4TEAVVV2ECR3BTYOID7Y7E5HCTBV6LYH1 |
| Verification Layer | 0 |

At block 412, the blockchain node 210 may transmit the updated smart contract to the blockchain node 206, which is part of the origin operator network 202. The blockchain node 206 can then validate the credentials of the updated smart contract. If validation fails, the blockchain node 206 can send a command to the origin operator network 202 to cancel the call and/or alter an administrative monitoring system. In some embodiments, if the original service request was for a call "invite" verification only, the blockchain node 206 can publish the smart contract on the blockchain 300 for signature validation and seal. In some embodiments, in the event of possible phone number portability, the blockchain node 206 can generate and send a separate smart contract to each eligible termination operator blockchain node 210 (i.e., when there is more than one termination operator). Here, only the blockchain nodes receiving the SIP Call Invite would be able to validate.

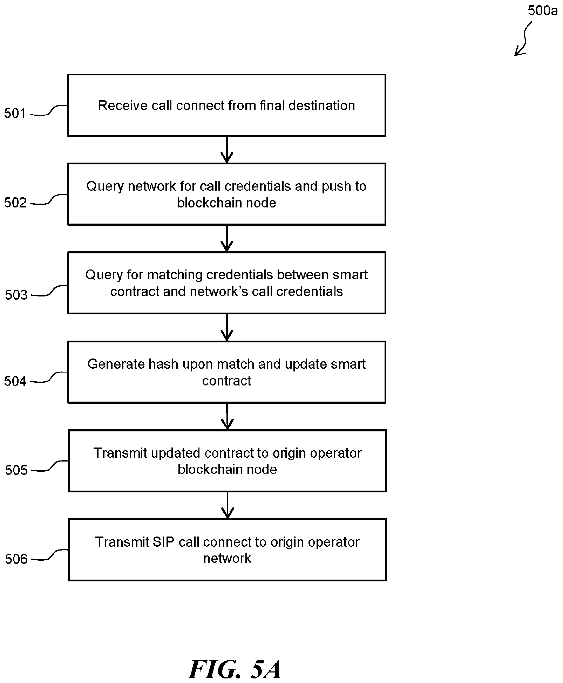

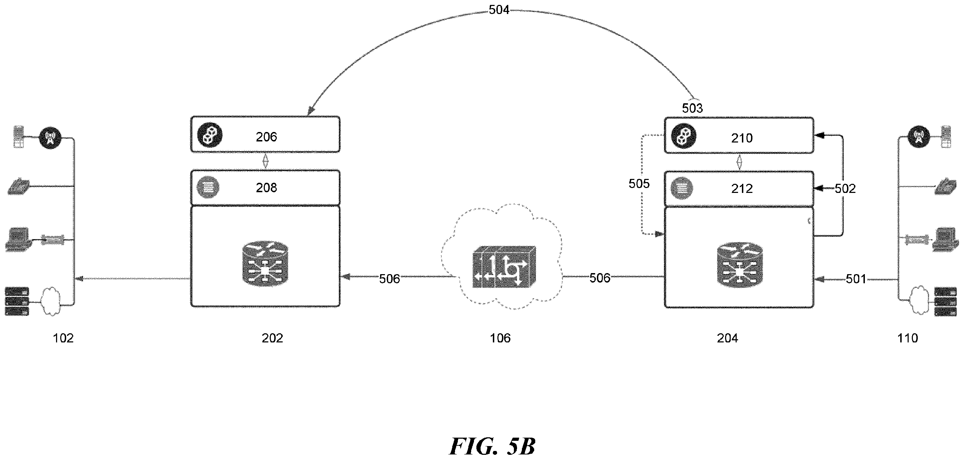

FIG. 5A is a flowchart of an example process 500a for commencing service according to example embodiments of the present disclosure. FIG. 5B is an example illustration of how process 500a of FIG. 5A is performed within the system of FIG. 2 according to example embodiments of the present disclosure.

At block 501 the termination operator network 204 may receive a "call connect" indication from a final destination 110. In some embodiments, the call connect indication can include SIP Call ID credentials. At block 502, the signaling log collector 212 may query the termination operator network 204 for call credentials and push this data to the blockchain node 210. In some embodiments, call credentials can include the origin phone number, the destination number, the call state time stamp, etc. In some embodiments, if the origin operator network 204 has the requisite functionality, the origin operator network 204 could alternatively push this data to the blockchain node 210 directly.

At block 503, the blockchain node 210 may query the SIP Call ID credentials of connected calls for a match with a smart contract. At block 504, upon detection of a match, the blockchain node 210 may generate a hash and update the matching smart contract of block 503. In some embodiments, generating the hash can include generating a Call Hash ID. In addition, the blockchain node 210 can update the smart contract with a Call Connect (SIP 200 OK). In some embodiments, SIP 200 OK can refer to a specific signaling message sent between networks when a connection occurs. However, the embodiments disclosed herein are not limited to utilizing SIP 200 OK and are applicable in a broader manner. An example of an updated smart contract is shown below in Table 4:

**Table 4.**

| | |
|---|---|
| Transaction ID | FTFFNH46FBI4UCHD3CPJBCBIRLASECMNBQ3AM4LPSJIYUUOHROGQ |
| Call Hash ID | b2b2abOb45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB | Ez8zrLmfzJXyCO-LN L6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID -IB | isbcrcpi2pbymaclztdtzzpbpmd2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID -IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |

At block 505, the blockchain node 210 may transmit the updated smart contract to the blockchain node 206 of the origin operator. In some embodiments, if the termination operator network 204 has the requisite functionality, it can request the HashID from the blockchain node 210 and insert the HashID into the SIP header. At block 506, the termination operator network 204 may transmit the SIP Call Connect (200 OK) to the origin operator network 202.

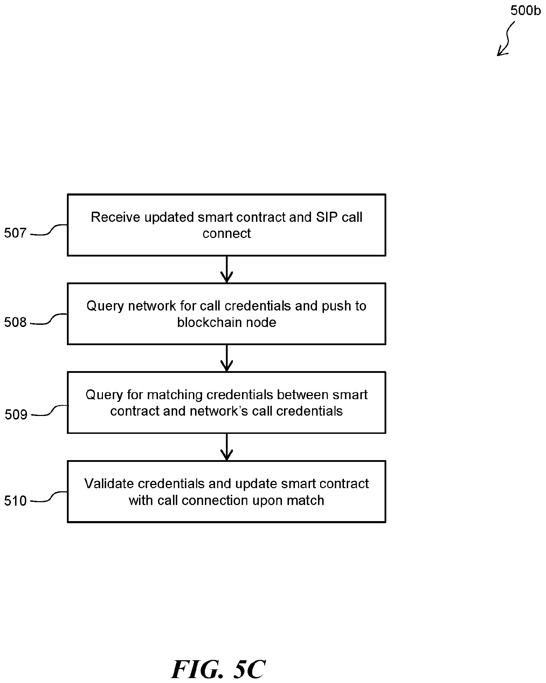

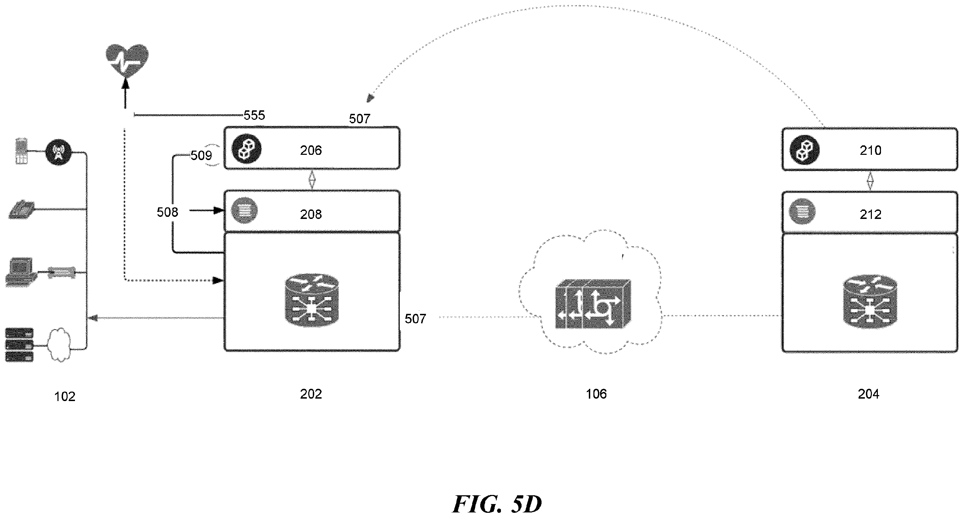

FIG. 5C is a flowchart of an additional example process 500b for commencing service according to example embodiments of the present disclosure. FIG. 5D is an example illustration of how process 500c of FIG. 5C is performed within the system of FIG. 2 according to example embodiments of the present disclosure.

At block 507, blockchain node 206 of the origin operator may receive the updated smart contract from the blockchain node 210. In addition, the origin operator network 202 may receive the SIP Call Connect (200 OK) from the termination operator network 204. At block 508, the signaling log collector 208 may query the origin operator network 202 for call credentials and push this data to the blockchain node 206. In some embodiments, if the origin operator network 202 has the requisite functionality, the origin operator network 202 could alternatively push this data to the blockchain node 206 directly.

At block 509, the blockchain node 206 may query for matching credentials between the received smart contract and the call credentials queried at block 508. In some embodiments, this can include one or more verification layers. For example, a first verification layer can include inserting the Call HashID into the SIP header matching the contract HashID. If the Call HashID is not present, a second verification layer can include recoding the SIP Call Ids at the call invite stage. In addition, a third verification layer can include the blockchain node 206 hashing the received dialed and origin numbers on the origin operator network 202 and matching the hash to the Call HashID and the specific call state timestamp of the smart contract. At block 510, upon detecting a match, the blockchain node 206 may validate the credentials and update the smart contract with a Call Connection ACK. An example of an updated smart contract is shown below in Table 5:

**Table 5**

| | |
|---|---|
| Transaction ID | FTFFNH46FBI4UCHD3CPJBCBIRLASECMNBQ3AM4LPSJIYUUOHROGQ |
| Call Hash ID | b2b2abOb45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID-OB | Ez8zrLmfzJXyCO-LN L6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID - IB | isbcrcpi2pbymaclztdtzzpbpmd2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect ACK SIP Timestamp | DD/MM/YYY hh:mm:ss UTC |
| SIP Call ID-OB | Ez8zrLmfzJXyCO-LN L6aoCo |
| Call Connect ACK signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |

In some embodiments, if validation fails, the blockchain node 206 can send a command to the origin operator network 202 to cancel the call and/or alert an administrative monitoring system 555.

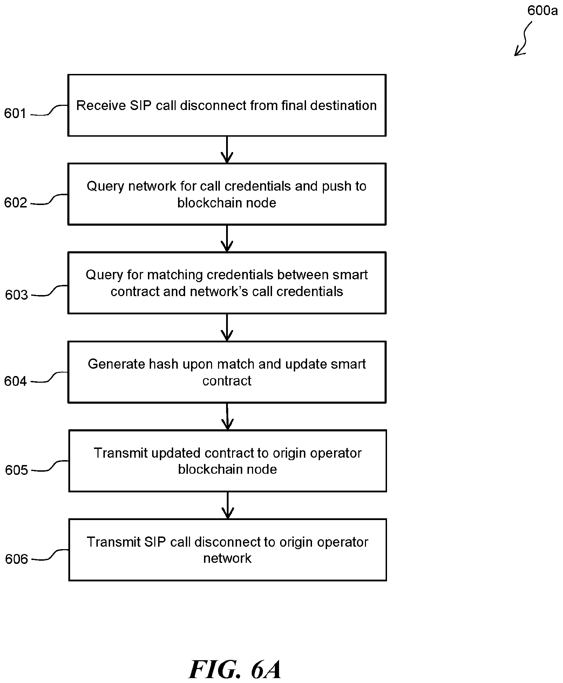

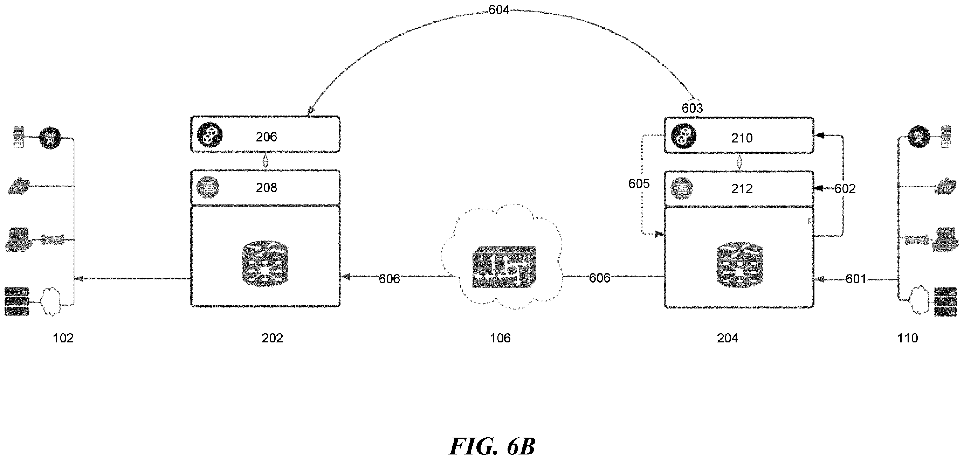

FIG. 6A is a flowchart of an example process 600a for ending service from a final destination according to example embodiments of the present disclosure. FIG. 6B is an example illustration of how process 600a of FIG. 6A is performed within the system of FIG. 2 according to example embodiments of the present disclosure.

At block 601, termination operator network 204 may receive an SIP call disconnect indication from a final destination 110. At block 602, the signaling log collector 212 may query the termination operator network 204 for call credentials and push this data to the blockchain node 210. In some embodiments, if the termination operator network 204 has the requisite functionality, the termination operator network 204 could alternatively push this data to the blockchain node 210 directly.

At block 603, the blockchain node 210 may query the SIP Call ID credentials of disconnected calls for a match with a smart contract. At block 604, upon detection of a match, the blockchain node 210 may generate a hash and update the matching smart contract. In some embodiments, generating the hash can include generating a Call HashID. In addition, the blockchain node 210 can update the smart contract with a call disconnect ACK. An example of an updated smart contract is shown below in Table 6:

**Table 6.**

| | |
|---|---|
| Transaction ID | FTFFNH46FBI4UCHD3CPJBCBIRLASECMNBQ3AM4LPSJIYUUOHROGQ |
| Call Hash ID | b2b2abOb45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID-OB | Ez8zrLmfzJXyCO-LNL6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID- IB | isbcrcpi2 pbymaclztdtzzpbpm d2 b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID- IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect ACK SIP Timestamp | DD/MM/YYY hh:mm:ss UTC |
| SIP Call ID-OB | Ez8zrLmfzJXyCO-LNL6aoCo |
| Call Connect ACK signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |
| Call Connect SIP Timestamp | DD/MM/YYY hh:mm:ss UTC |
| SIP Call ID- IB | isbcrcpi2pbymaclztdtzzpbpmd2b6m6tzcp |
| Call Disconnect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |

At block 605, the blockchain node 210 may transmit the updated smart contract to the blockchain node 206 of the origin operator. In some embodiments, if the termination operator network 204 has the requisite functionality, it can request the HashID from the blockchain node 210 and insert it into the SIP header. At block 606, the termination operator network 204 may transmit an SIP call disconnect indication to the origin operator network 202.

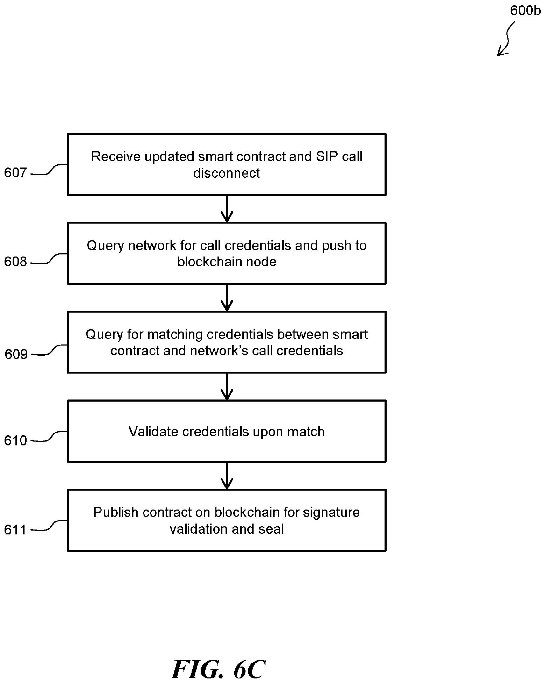

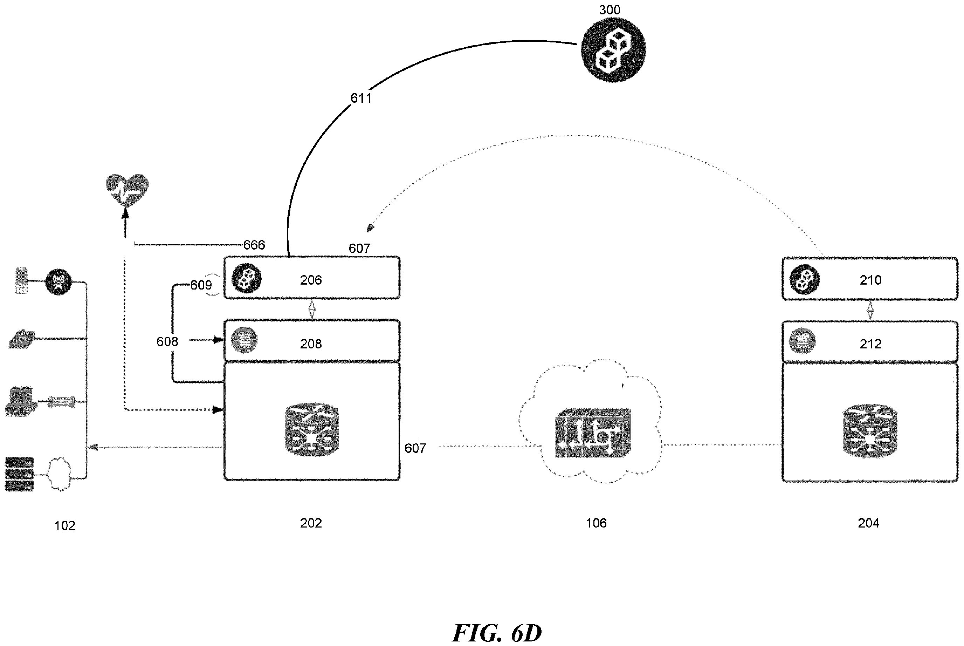

FIG. 6C is a flowchart of an additional example process 600b for ending service from a final destination according to example embodiments of the present disclosure. FIG. 6D is an example illustration of how the process of FIG. 6C is performed within the system of FIG. 2 according to example embodiments of the present disclosure. In some embodiments, FIGS. 6C-6D are applicable to both voice messages and SMS messages. In the case of SMS transmissions, there is an SMS receipt and the smart contract is used for confirmation of receipt. In addition, the steps that refer to a Call HashID may only be applicable to voice transmissions or used within other layers (as may be permitted by the specific digital medium implementation).

At block 607, the blockchain node 206 of the origin operator may receive the updated smart contract, and the origin operator network 202 may receive the SIP call disconnect indication. At block 608, the signaling log collection 208 may query the origin operator network 202 for call credentials and push the data to the blockchain node 206. In some embodiments, if the origin operator network 202 has the requisite functionality, the origin operator network 202 could alternatively push this data to the blockchain node 206 directly.

At block 609, the blockchain node 206 may query for matching credentials between the smart contract and the call credentials at the origin operator network 202. In some embodiments, this can include one or more verification layers. For example, a first verification layer can include inserting the Call HashID into the SIP header. If the Call HashID is not present, a second verification layer can include recoding SIP call IDs at the call invite stage. In addition, a third verification layer can include the blockchain node 206 hashing the received dialed and origin numbers on the origin operator network 202 and matching the hash to the Call HashID and the specific call state timestamp of the smart contract. Layers relying on data in the SIP header can be omitted or used within other layers (as may be permitted by the specific digital medium implementation) when verifying data associated with messages that do not use SIP headers, such as SMS messages, as a person of ordinary skill in the art will appreciate. At block 610, upon detecting a match, the blockchain node 206 may validate the credentials. In some embodiments, if validation fails or the smart contract has not been received, the blockchain node 206 can command the origin operator network 202 to cancel the call and/or alert an administrative monitoring system 666. At block 611, the blockchain node 206 can publish the smart contract on the blockchain 300 for signature validation and seal.

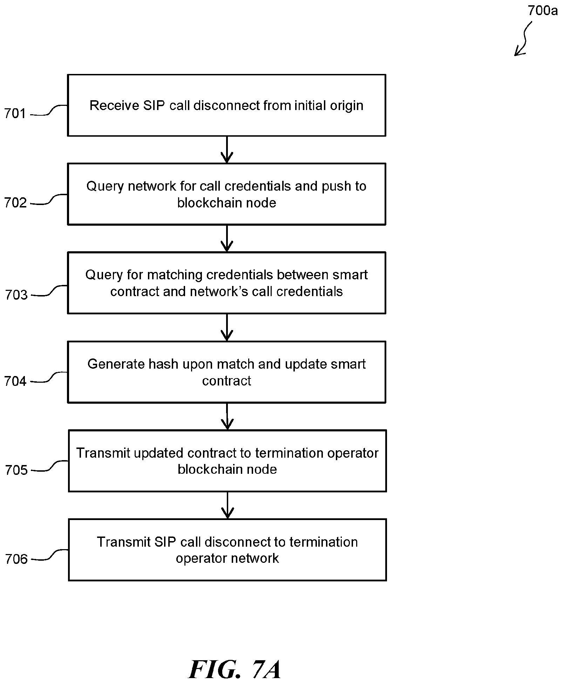

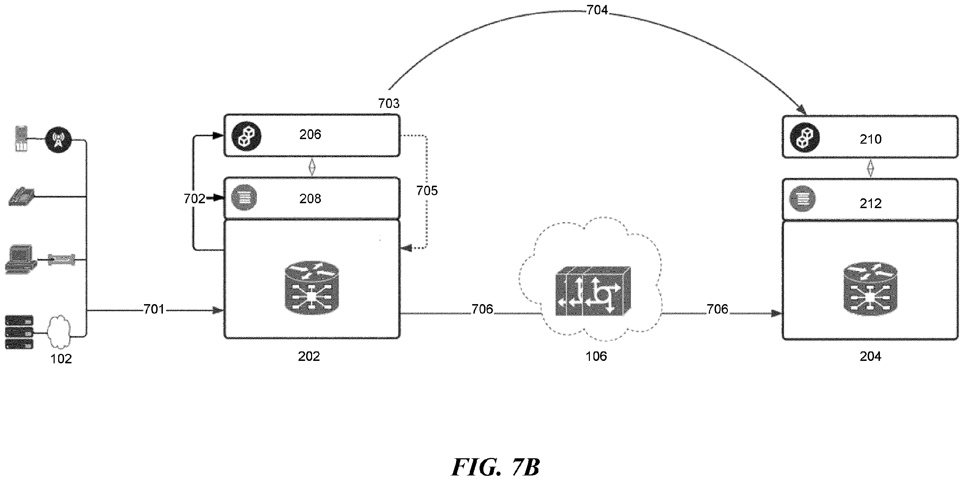

FIG. 7A is a flowchart of an example process 700a for ending service according to example embodiments of the present disclosure. FIG. 7B is an example illustration of how process 700a of FIG. 7A is performed within the system of FIG. 2 according to example embodiments of the present disclosure.

At block 701, the origin operator network 202 may receive an SIP call disconnect indication from an initial origination 102. At block 702, the signaling log collector 208 may query the origin operator network 202 for call credentials and push this data to the blockchain node 206. In some embodiments, if the origin operator network 202 has the requisite functionality, the origin operator network 202 could alternatively push this data to the blockchain node 206 directly. At block 703, the blockchain node 206 may query the SIP Call ID credentials of disconnected calls for a match with a smart contract. At block 704, upon detection of a match, the blockchain node 206 may generate a hash and update the matching smart contract. In some embodiments, generating the hash can include generating a Call HashID. In addition, the blockchain node 206 can update the smart contract with a call disconnect ACK. An example of an updated smart contract is shown below in Table 7:

**Table 7.**

| | |
|---|---|
| Transaction ID | FTFFNH46FBI4UCHD3CPJBCBIRLASECMNBQ3AM4LPSJIYUUOHROGQ |
| Call Hash ID | b2b2abOb45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID-OB | Ez8zrLmfzJXyCO-LNL6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID - IB | isbcrcpi2 pbym a clztdtzzpbpm d2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect ACK SIP Timestamp | DD/MM/YYY hh:mm:ss UTC |
| SIP Call ID-OB | Ez8zrLmfzJXyCO-LNL6aoCo |
| Call Connect ACK signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |
| Call Connect ACK SIP Timestamp | DD/MM/YYY hh:mm:ss UTC |
| SIP Call ID-OB | Ez8zrLmfzJXyCO-LNL6aoCo |
| Call Disconnect signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |

At block 705, the blockchain node 206 may transmit the updated smart contract to the blockchain node 210 of the termination operator network. In some embodiments, if the origin operator network 202 has the requisite functionality, it can request the HashID from the blockchain node 206 and insert it into the SIP header. At block 706, the origin operator network 202 may transmit an SIP call disconnect indication to the termination operator network 204.

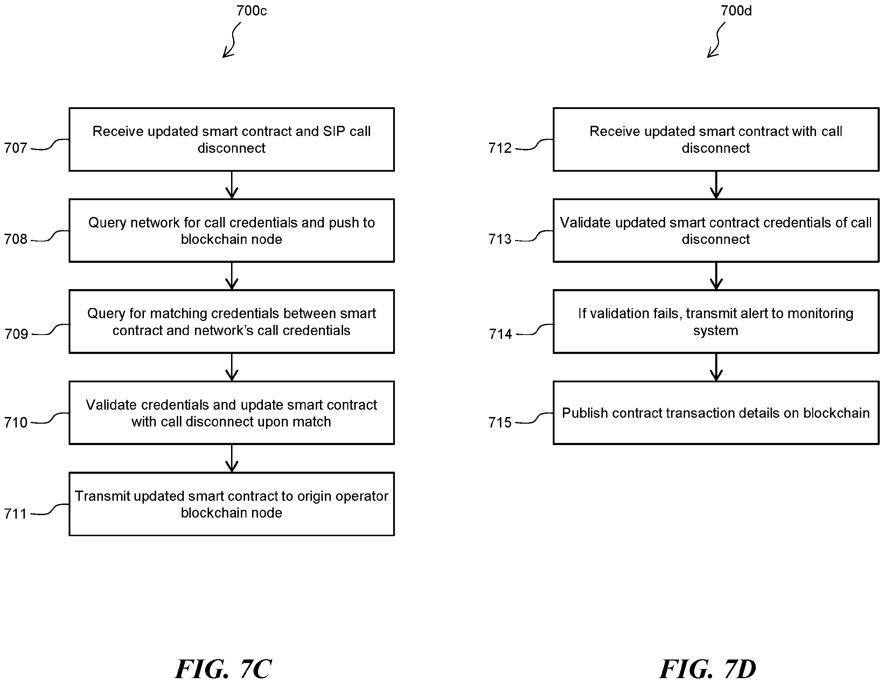

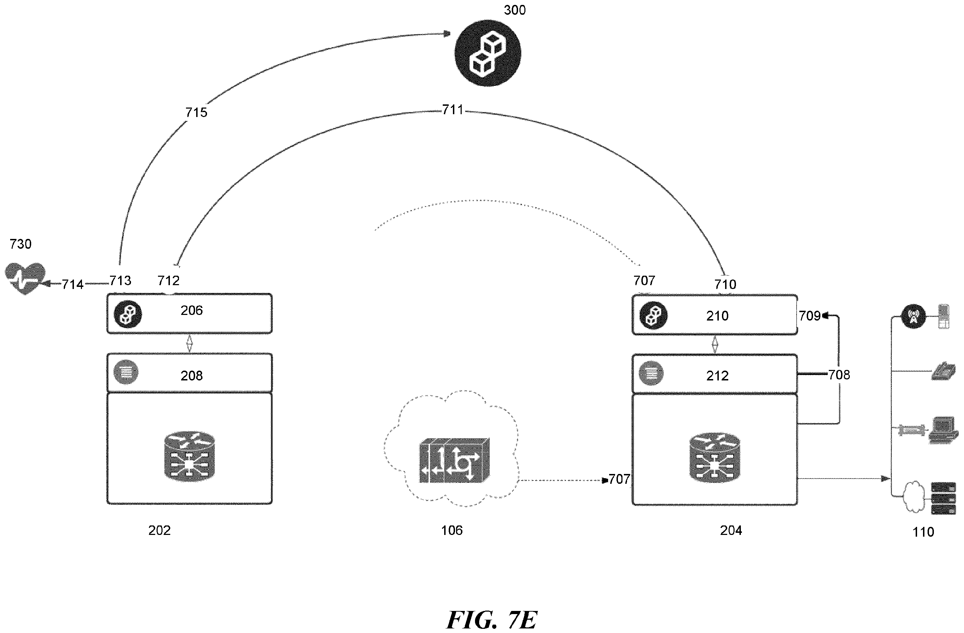

FIGS. 7C-7D are flowcharts of additional example processes 700b and 700b for ending service from a final destination according to example embodiments of the present disclosure. FIG. 7E is an example illustration of how processes 700c and 700d of FIGS. 7C and 7D are performed within the system of FIG. 2 according to example embodiments of the present disclosure.

At block 707, the blockchain node 210 may receive the updated smart contract, and the termination operator network 204 may receive the SIP call disconnect indication. At block 708, the signaling log collector 212 may query the termination operator network 204 for call credentials and push this data to the blockchain node 210. At block 709, the blockchain node 210 may query for matching credentials between the smart contract and the call credentials at the termination operator network 204. In some embodiments, this can include one or more verification layers. For example, a first verification layer can include inserting the Call HashID into the SIP header. If the Call HashID is not present, a second verification layer can include recoding SIP call IDs at the call invite stage. In addition, a third verification layer can include the blockchain node 210 hashing the received dialed and origin numbers on the termination operator network 204 and matching the hash to the Call HashID and the specific call state timestamp of the smart contract. At block 710, upon detecting a match, the blockchain node 206 may validate the credentials and update the smart contract with a Call Disconnect ACK. In some embodiments, if validation fails or the smart contract has not been received, the blockchain node 210 can command the termination operator network 204 to cancel the call and/or alert an administrative monitoring system 730. An example of an updated smart contract is shown below in Table 8:

**Table 8.**

| | |
|---|---|
| Transaction ID | FTFFNH46FBI4UCHD3CPJBCBIRLASECMNBQ3AM4LPSJIYUUOHROGQ |
| Call Hash ID | b2b2abOb45a107bbdea4fc52d66fea736f13bb7d885910407ed4c983e3aa0512 |
| Origin Member ID | W4SJ7NE7UEYBKMWVNHKVNNEPPVOWNQMN2EVICBRSPOGV40PZEU4JQHLSLY |
| Destination Member ID | YITAU71M3HZQJIK2ZVZUFNW3H4TEAVVV2ECR3BTYOID7Y7ESHCTBV6LYHI |
| Invite Request SIP Timestamp | DD/MM/YYY hh:mm:ss UTC |
| SIP Call ID-OB | Ez8zrLmfzJXyCO-LN L6aoCo |
| Invite Request signee | W4SJ7NE7UEYBKMWVNHKVNNEPPVOWNQMN2EVICBRSPOGV40PZEU4JQHLSLY |
| Verification Type | Option - Invite or Connect |
| Invite ACK SIP Timestamp | DD/MM/YYY hh:mm:ss UTC |
| SIP Call ID - IB | isbcrcpi2pbymaclztdtzzpbpmd2b6m6tzcp |
| Invite ACK signee | YITAU71M3HZQJIK2ZVZUFNW3H4TEAVVV2ECR3BTYOID7Y7ESHCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU71M3HZQJIK2ZVZUFNW3H4TEAVVV2ECR3BTYOID7Y7ESHCTBV6LYHI |
| Verification Layer | 1, 2, or 3 (Pending on the BC nodes credential verification type) |
| Call Connect ACK SIP Timestamp | DD/MM/YYY hh:mm:ss UTC |
| SIP Call ID-OB | Ez8zrLmfzJXyCO-LN L6aoCo |
| Call Connect ACK signee | W4SJ7NE7UEYBKMWVNHKVNNEPPVOWNQMN2EVICBRSPOGV40PZEU4JQHLSLY |
| Verification Layer | 1, 2, or 3 (Pending on the BC nodes credential verification type) |
| Call Connect ACK SIP Timestamp | DD/MM/YYY hh:mm:ss UTC |
| SIP Call ID-OB | Ez8zrLmfzJXyCO-LN L6aoCo |
| Call Disconnect signee | W4SJ7NE7UEYBKMWVNHKVNNEPPVOWNQMN2EVICBRSPOGV40PZEU4JQHLSLY |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Disconnect ACK signee | YITAU71M3HZQJIK2ZVZUFNW3H4TEAVVV2ECR3BTYOID7Y7ESHCTBV6LYHI |
| Verification Layer | 1, 2, or 3 (Pending on the BC nodes credential verification type) |

At block 711, the blockchain node 210 may transmit the updated smart contract to the blockchain node 206 of the origin operator.

Process 700d can begin with block 712, where the blockchain node 206 of the origin operator may receive the updated smart contract that includes the call disconnect ACK. At block 713, the blockchain node 206 may validate the updated smart contract credentials. At block 714, if validation fails, the blockchain node 206 may transmit an alert to the monitoring system 730. At block 715, the blockchain node 206 may publish the smart contract transaction details on the blockchain 300 for signature validation and contract seal.

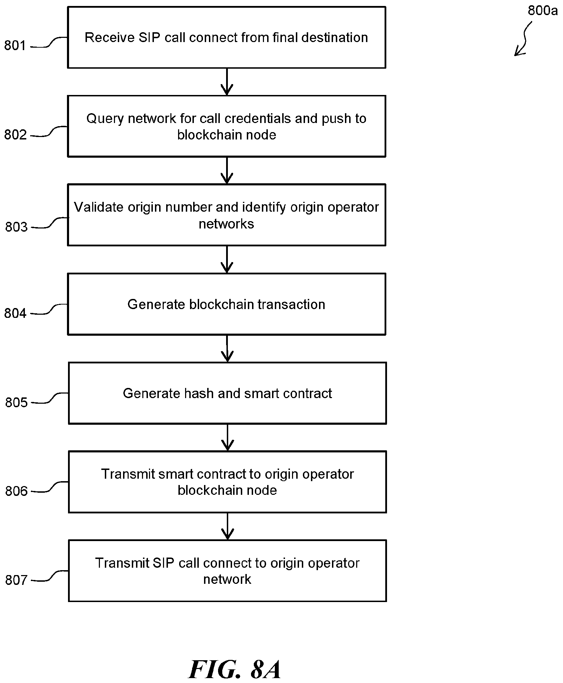

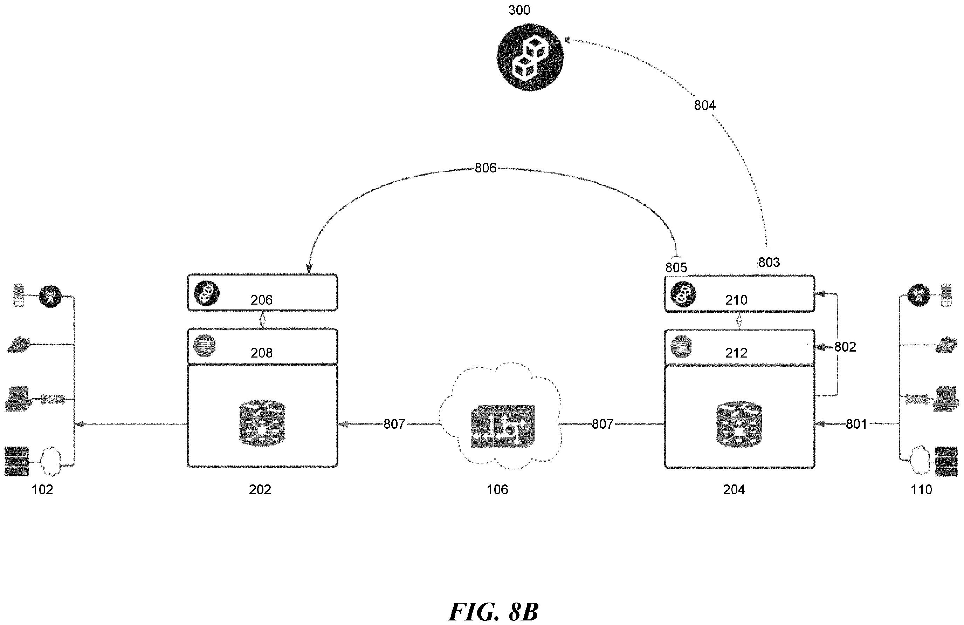

FIG. 8A is a flowchart of an example process 800a for verifying an origin identity according to example embodiments of the present disclosure. FIG. 8B is an example illustration of how the process of FIG. 8A is performed within the system of FIG. 2 according to example embodiments of the present disclosure.

At block 801, the termination operator network 204 may receive an SIP call connect (200 OK) indication from a final destination 110. In some embodiments, the SIP call connect can include dialed number credentials. For example, the origin number can be "1 202 555 1212" and the dialed number can be "34 606 202 707." At block 802, the signaling log collector 212 may query the termination operator network 204 for call credentials and push this data to the blockchain node 210. In some embodiments, if the termination operator network 204 has the requisite functionality, the termination operator network 204 could alternatively push this data to the blockchain node 210 directly.

At block 803, the blockchain node 210 may validate the origin number and identiy the relevant origin operator networks, such as origin operator network 202. In addition, the blockchain node 206 can validate that the dialed number is "1 202 555 1212," that the destination country is the USA (i.e., 1=USA), that the number assigned network is AT&T (i.e., 202=AT&T), and that the origin member ID (i.e., wallet ID of the origin operator network blockchain node 206) is
"W4SJ7NE7UEYBKMWVNHKVNNEPPVOWNQMN2EVICBR5POGV4OPZEU4JQHL5LY. "

At block 804, the blockchain node 210 may generate a blockchain transaction for the call. In some embodiments, generating the blockchain transaction can include generating a blockchain transaction ID (i.e., TXN_ID) and linking the ID to the associated wallet ID. For example, the transaction ID could be
"DONDKSH6SR4E2KCT2YGGPFBPGUWSISP4HDAUAR6D25EEUZ4C4UTQ" and the origin member wallet ID is
"YITAU7IM3HZQJIK2ZVZUFNW3H4TEAVW2ECR3BTYOID7Y7E5HCTBV6LYHI." At block 805, the blockchain node 210 may generate a hash and a smart contract (also referred to as a signature request contract). In some embodiments, the blockchain node 210 can generate a Call HashID based on the dialed number (e.g., 34 606 202 707) and the number of the original caller (e.g., 1 202 555 1212). An example Hashed Call ID could be
"9977db3c810b2e7dc18080110f8cc108e1be02bafaa5524dbc25967ac044aa7b." In some embodiments, as discussed above, the smart contract can operate as a validation tool that validates the identity of the requester through a wallet ID signature. An example smart contract that can be generated by the blockchain node 206 is shown below in Table 9:

**Table 9.**

| | |
|---|---|
| Transaction ID | DONDK5H6SR4E2KCT2YGGPFBPGUW5ISP4HDAUAR6D25EEUZ4C4UTQ |
| Call Hash ID | 9977db3c810b2e7dc18080110f8cc108e1be02bafaa5524dbc25967ac044aa7b |
| Origin Member ID | YITAU71M3HZQJIK2ZVZUFNW3H4TEAVVV2ECR3BTYOID7Y7ESHCTBV6LYHI |
| Destination Member ID | W4SJ7NE7UEYBKMWVNHKVNNEPPVOWNQMN2EVICBRSPOGV4OPZEU4JQHL5LY |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU71M3HZQJIK2ZVZUFNW3H4TEAVVV2ECR3BTYOID7Y7E5HCTBV6LYH1 |
| Verification Layer | 1, 2, or 3 (Pending on the BC nodes credential verification type) |
| Verification Type | Origin Verification |

At block 806, the blockchain node 210 may transmit the smart contract to the blockchain node 206, which is connected to the origin operator network 202. In some embodiments, the transmission of the smart contract from the blockchain node 210 to the blockchain node 206 is performed "out of band." In other words, the transmission does not go through any of the intermediaries 106. In some embodiments, if the termination operator network 204 has the requisite functionality, the termination operator network 204 can request the Call HashID (generated at block 805) from the blockchain node 210 and insert it into the SIP header of the call invite. At block 807, the termination operator network 204 transmits the SIP call invite to the origin operator network 202, traversing any intermediary networks.

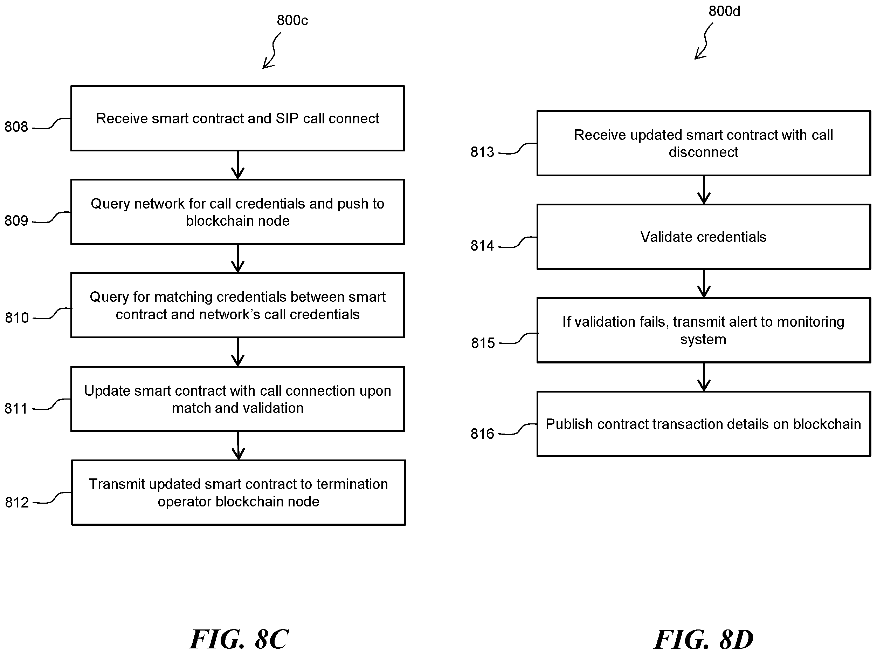

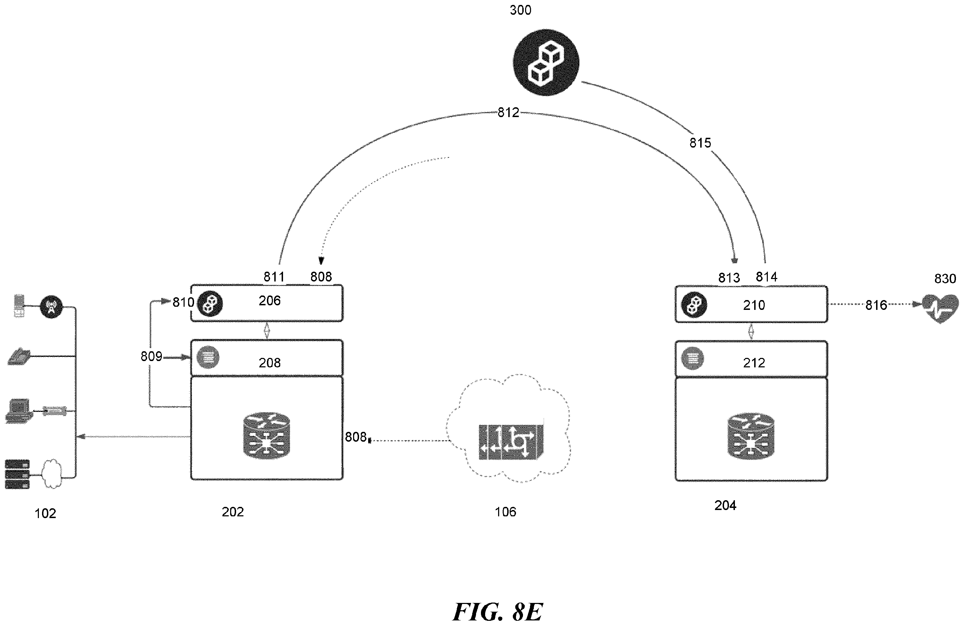

FIGS. 8C-8D are flowcharts of additional example processes 800c and 800d for verifying an origin identity according to example embodiments of the present disclosure. FIG. 8E is an example illustration of how processes 800c and 800d of FIGS. 8C and 8D are performed within the system of FIG. 2 according to example embodiments of the present disclosure.

At block 808 of process 800c, the blockchain node 206 may receive the smart contract from the blockchain node 210, and the origin operator network 202 may receive the SIP Call Connect indication from the termination operator network 204. At block 809, the signaling log collector 208 may query the origin operator network 202 for call credentials and push this data to the blockchain node 206. In some embodiments, if the origin operator network 202 has the requisite functionality, the origin operator network 202 could alternatively push this data to the blockchain node 206 directly.

At block 810, the blockchain node 206 may query for matching credentials between the received smart contract and the call credentials queried at block 808. In some embodiments, this can include one or more verification layers. For example, a first verification layer can include inserting the Call HashID into the SIP header. If the Call HashID is not present, a second verification layer can include verifying the SIP Call ID. In addition, a third verification layer can include the blockchain node 206 hashing the received dialed and origin numbers on the origin operator network 202 and matching the hash to the Call HashID and the specific call state timestamp of the smart contract. At block 811, upon matching and validating of the credentials, the blockchain node 206 may update the smart contract with a Call Connection ACK. An example updated smart contract is shown below in Table 10:

**Table 10.**

| | |
|---|---|
| Transaction ID | DONDK5H6SR4E2KCT2YGGPFBPGUW5ISP4HDAUAR6D25EEUZ4C4UTQ |
| Call Hash ID | 9977db3c810b2e7dc18080110f8cc108e1be02bafaa5524dbc25967ac044aa7b |
| Origin Member ID | YITAU71M3HZQJIK2ZVZUFNW3H4TEAVVV2ECR3BTYOID7Y7E5HCTBV6LYHI |
| Destination Member ID | W4SJ7NE7UEYBKMWVNHKVNNEPPVOWNQMN2EVICBRSPOGV4OPZEU4JQHL5LY |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | W4SJ7NE7UEYBKMWVNHKVNNEPPVOWNQMN2EVICBRSPOGV4OPZEU4JQHL5LY |
| Verification Layer | 1, 2, or 3 (Pending on the BC nodes credential verification type) |
| Verification Type | Origin Verification |
| Call Connect ACK SIP Timestamp | DD/MM/YYY hh:mm:ss UTC |
| SIP Call ID - OB | 2c7ae17d-2597578b-16a4c1-7fe0f33571c0-daf11f59 |
| Call Connect ACK signee | YITAU71M3HZQJIK2ZVZUFNW3H4TEAVVV2ECR3BTYOID7Y7E5HCTBV6LYHI |
| Verification Layer | 1, 2, or 3 (Pending on the BC nodes credential verification type) |

In some embodiments, if no match is found within the transaction timer limit, as defined by the blockchain node 210, from the time the contract has been received, the blockchain node 210 may update the smart contract with a Failed ACK, an example of which is shown below in Table 11:

**Table 11.**

| | |
|---|---|
| Call Connect ACK SIP Timestamp | 0 |
| SIP Call ID - OB | 0 |
| Call Connect ACK signee | YITAU71M3HZQJIK2ZVZUFNW3H4TEAVVV2ECR3BTYOID7Y7E5HCTBV6LYHI |
| Verification Layer | 0 |

At block 812, the blockchain node 206 may transmit the updated smart contract to the blockchain node 210 of the termination operator.

Process 800d can begin with block 813, where the blockchain node 210 of the termination operator may receive the updated smart contract that includes the call connection ACK. At block 814, the blockchain node 210 may validate the updated smart contract credentials. At block 815, if validation fails, the blockchain node 210 may transmit an alert to the monitoring system 830. At block 816, the blockchain node 210 may publish the smart contract transaction details on the blockchain 300 for signature validation and contract seal.

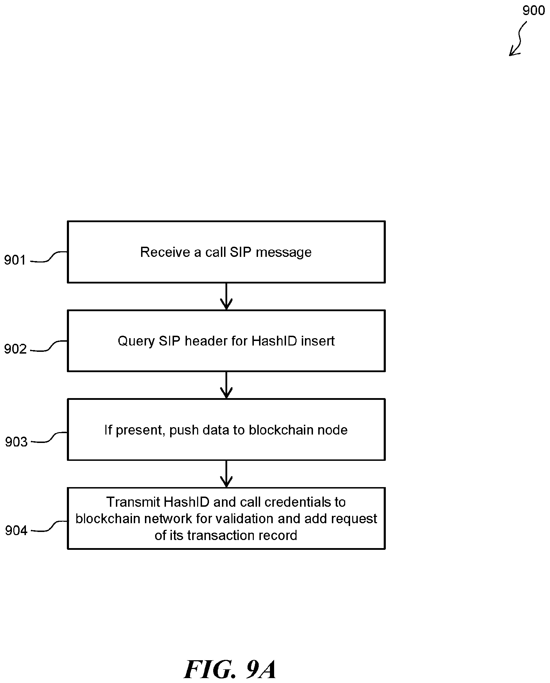

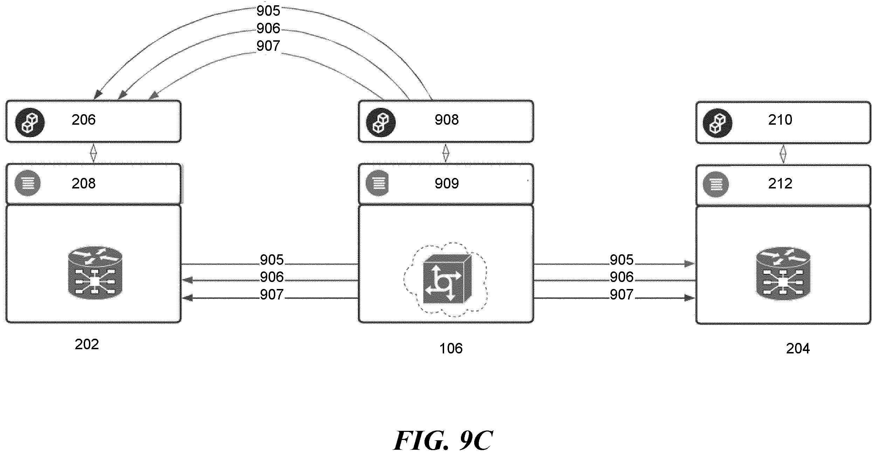

FIG. 9A is a flowchart of an example process 900 for an intermediary joining a contract according to example embodiments of the present disclosure. In some embodiments, process 900 enables an intermediary 106 existing within a transaction to "tag along" in the various processes. It also may include the condition that a HashID insert in the SIP message is present. In some embodiments, an intermediary 106 can be a party existing between an origin operator network 202 and a termination operator network 204 or between other intermediaries 106 within the transaction. In some embodiments, any intermediary 106 (in the embodiments where there are multiple) can join as a "tag along."

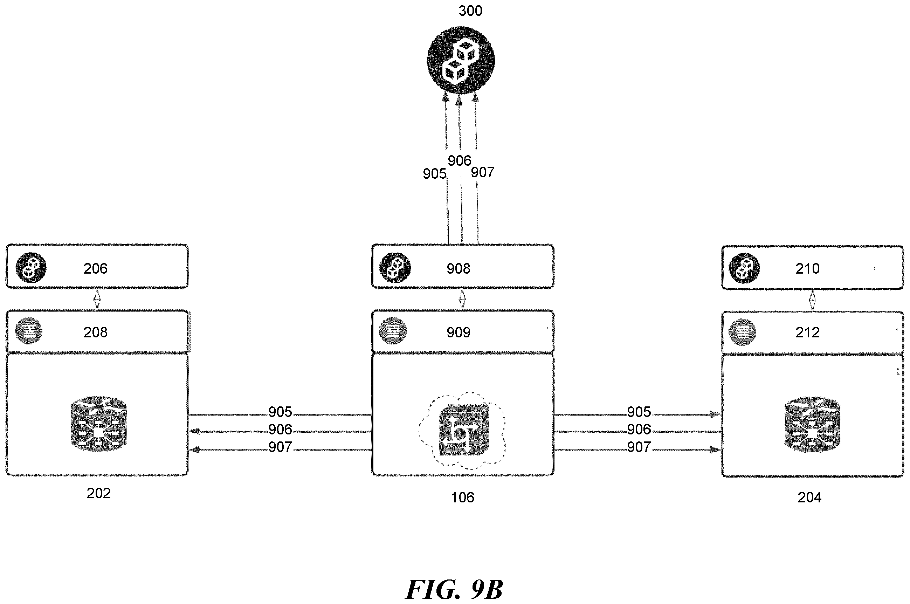

At block 901, the intermediary 106 may receive a call SIP message. At block 902, a signaling log collector 907 (which is part of the intermediary 106, see FIGS. 9B-9D) may query the SIP header for a HashID insert. At block 903, if the HashID insert is present, the signaling log collector 907 may push the queried data to a blockchain node 908 (which is also part of the intermediary 106, see FIGS. 9B-9D). At block 904, the blockchain node 908 may transmit the HashID and call credentials to the blockchain network 300 for validation and add a request of its transaction record. In some embodiments, the validation can include 1) an authentication of the identity of the intermediary; and 2) an authentication of the HashID and call credential validity against an existing contract. In some embodiments, upon validation, the intermediary transaction record can be annexed to the associated smart contract.

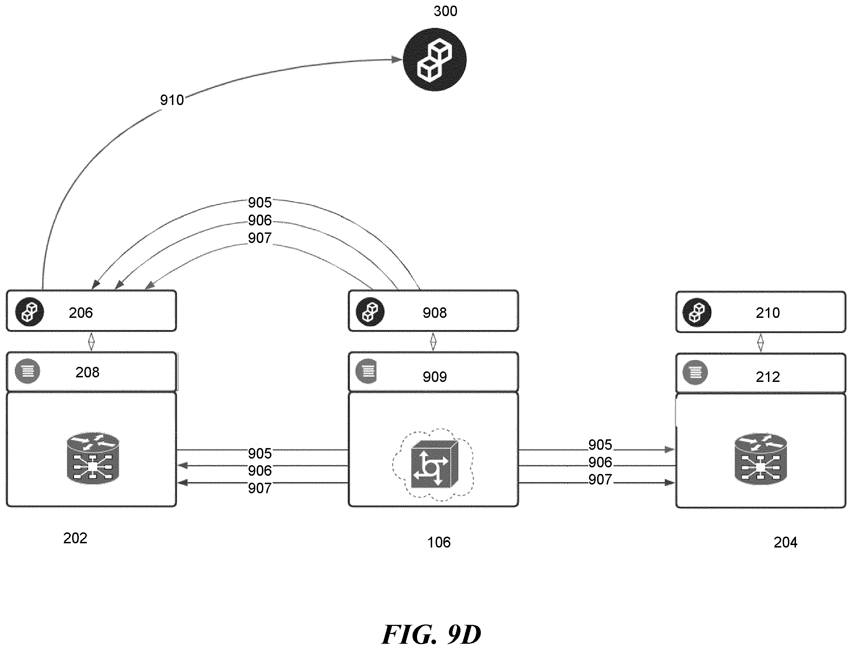

FIGS. 9B-9D are example illustrations of how the process of FIG. 9A is performed within the system of FIG. 2 according to example embodiments of the present disclosure. In some embodiments, there are various stages that take place, such as a call invite/initiation 905, a call connect 906, and a call end/terminate 907. Process 900 can be performed at each of these stages. In FIG. 9D, the "compiled contract" with the various annexed recordings is pushed to the blockchain 300 for signature validations and seal at 910.

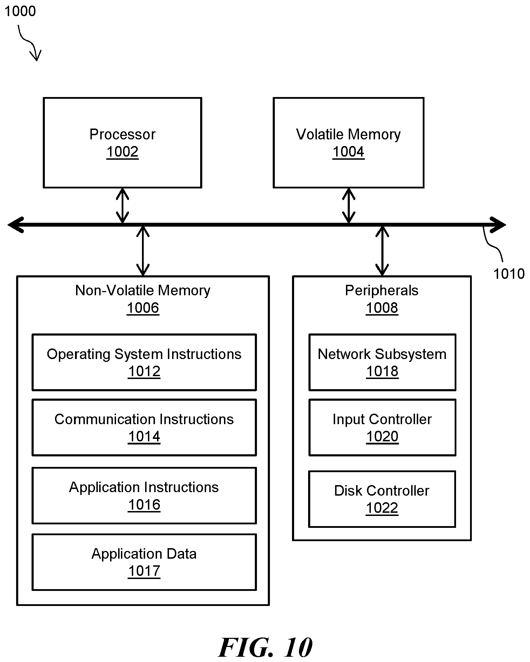

FIG. 10 is a diagram of an example server device 1000 that can be used within system 100 of FIG. 1. Server device 1000 can implement various features and processes as described herein. Server device 1000 can be implemented on any electronic device that runs software applications derived from complied instructions, including without limitation personal computers, servers, smart phones, media players, electronic tablets, game consoles, email devices, etc. In some implementations, server device 1000 can include one or more processors 1002, volatile memory 1004, non-volatile memory 1006, and one or more peripherals 1008. These components can be interconnected by one or more computer buses 1010.

Processor(s) 1002 can use any known processor technology, including but not limited to graphics processors and multi-core processors. Suitable processors for the execution of a program of instructions can include, by way of example, both general and special purpose microprocessors, and the sole processor or one of multiple processors or cores, of any kind of computer. Bus 1010 can be any known internal or external bus technology, including but not limited to ISA, EISA, PCI, PCI Express, USB, Serial ATA, or FireWire. Volatile memory 1004 can include, for example, SDRAM. Processor 1002 can receive instructions and data from a read-only memory or a random access memory or both. Essential elements of a computer can include a processor for executing instructions and one or more memories for storing instructions and data.

Non-volatile memory 1006 can include by way of example semiconductor memory devices, such as EPROM, EEPROM, and flash memory devices; magnetic disks such as internal hard disks and removable disks; magneto-optical disks; and CD-ROM and DVD-ROM disks. Non-volatile memory 1006 can store various computer instructions including operating system instructions 1012, communication instructions 1014, application instructions 1016, and application data 1017. Operating system instructions 1012 can include instructions for implementing an operating system (e.g., Mac OS^{®}, Windows^{®}, or Linux). The operating system can be multi-user, multiprocessing, multitasking, multithreading, real-time, and the like. Communication instructions 1014 can include network communications instructions, for example, software for implementing communication protocols, such as TCP/IP, HTTP, Ethernet, telephony, etc. Application instructions 1016 can include instructions for various applications. Application data 1017 can include data corresponding to the applications.

Peripherals 1008 can be included within server device 1000 or operatively coupled to communicate with server device 1000. Peripherals 1008 can include, for example, network subsystem 1018, input controller 1020, and disk controller 1022. Network subsystem 1018 can include, for example, an Ethernet of WiFi adapter. Input controller 1020 can be any known input device technology, including but not limited to a keyboard (including a virtual keyboard), mouse, track ball, and touch-sensitive pad or display. Disk controller 1022 can include one or more mass storage devices for storing data files; such devices include magnetic disks, such as internal hard disks and removable disks; magneto-optical disks; and optical disks.

The described features can be implemented in one or more computer programs that can be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions can include, by way of example, both general and special purpose microprocessors, and the sole processor or one of multiple processors or cores, of any kind of computer. Generally, a processor can receive instructions and data from a read-only memory or a random access memory or both. The essential elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as an LED or LCD monitor for displaying information to the user and a keyboard and a pointing device such as a mouse or a trackball by which the user may provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an API. An API may define one or more parameters that are passed between a calling application and other software code (e.g., an operating system, library routine, function) that provides a service, that provides data, or that performs an operation or a computation.

The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API.

In some implementations, an API call may report to an application the capabilities of a device running the application, such as input capability, output capability, processing capability, power capability, communications capability, etc.

While various embodiments have been described above, it should be understood that they have been presented by way of example and not limitation. It will be apparent to persons skilled in the relevant art(s) that various changes in form and detail may be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

Also disclosed herein are the following numbered clauses:
1. A system for media transmission comprising:
   a signaling log collector in communication with an origin operator network, the signaling log collector being configured to:
      in response to the origin operator network receiving a transmission invite, query the origin operator network for one or more credentials associated with the transmission invite; and
      push the one or more credentials to a blockchain node; and
   the blockchain node, wherein the blockchain node is in communication with the origin operator network, the signaling log collector, and a blockchain and configured to:
      validate the one or more credentials;
      generate a blockchain transaction for the transmission invite;
      generate a hash from the one or more credentials;
      generate a smart contract for the transmission invite; and
      transmit the smart contract to an additional blockchain node connected to a termination operator network.
2. The system of clause 1, wherein the signaling log collector and the blockchain node are installed on a cloud.
3. The system of clause 1, wherein the signaling log collector and the blockchain node are installed at a premises associated with the origin operator network.
4. The system of clause 1, wherein generating the blockchain transaction comprises linking the one or more credentials to a digital wallet associated with the origin operator network.
5. The system of clause 1, wherein querying the origin operator network for the one or more credentials comprises querying the origin operator network for at least one of an origin phone number, a destination phone number, or a time stamp.
6. The system of clause 5, wherein generating the hash from the one or more credentials comprises hashing the origin phone number and the destination phone number.
7. The system of clause 1, wherein the smart contract validates an identity of the origin operator network at the termination operator network using a digital wallet ID.
8. The system of clause 1, wherein the blockchain comprises an Algorand blockchain.
9. The system of clause 1, wherein the blockchain node comprises an application programming interface (API) configured to interact with a blockchain platform for accessing the blockchain.
10. A system for media transmission comprising:
   a blockchain node in communication with a termination operator network and a blockchain and configured to:
      receive a smart contract for a transmission invite from an additional blockchain node connected to an origin operator network; and
   a signaling log collector, wherein the signaling log collector is in communication with the termination operator network and the blockchain node and configured to:
      in response to the termination operator network receiving the transmission invite, query the termination operator network for one or more credentials associated with the transmission invite; and
      push the one or more credentials to the blockchain node;
   wherein the blockchain node is further configured to:
      query the one or more credentials and the smart contract to identify one or more matching credentials;
      update the smart contract with an acknowledgement indication; and
      transmit the updated smart contract to the additional blockchain node.
11. The system of clause 10, wherein the signaling log collector and the blockchain node are installed on a cloud.
12. The system of clause 10, wherein the signaling log collector and the blockchain node are installed at a premises associated with the termination operator network.
13. The system of clause 10, wherein querying the termination operator network for the one or more credentials comprises querying the termination operator network for at least one of an origin phone number, a destination phone number, or a time stamp.
14. The system of clause 10, wherein the smart contract validates an identity of the origin operator network at the termination operator network using a digital wallet ID.
15. The system of clause 10, wherein the blockchain comprises an Algorand blockchain.
16. The system of clause 10, wherein the blockchain node comprises an application programming interface (API) configured to interact with a blockchain platform for accessing the blockchain.
17. The system of clause 13, wherein the smart contract comprises a hash and querying the one or more credentials and the smart contract to identify the one or more matching credentials comprises inserting the hash into a header associated with the transmission invite.
18. The system of clause 17, wherein the hash is a first hash and the blockchain node is configured to:
   hash the origin phone number and the destination phone number to generate a second hash; and
   match the second hash to the first hash.
19. The system of clause 18, wherein the blockchain node is configured to update the smart contract with a failure acknowledgement if a match is not identified within a predetermined time period after receiving the smart contract.
20. A computer-implemented method for validating a media transmission performed by a processor located at an origin operator network comprising:
   receiving one or more credentials associated with a transmission invite from a signaling log collector;
   validating the one or more credentials;
   generating a blockchain transaction for the transmission invite;
   generating a hash from the one or more credentials;
   generating a smart contract for the transmission invite; and
   transmitting the smart contract to a blockchain node connected to a termination operator network.

## Claims

1. A system for media transmission comprising:
a signaling log collector in communication with an origin operator network, the signaling log collector being configured to:
in response to the origin operator network receiving a transmission invite, query the origin operator network for one or more credentials associated with the transmission invite; and
push the one or more credentials to a blockchain node; and
the blockchain node, wherein the blockchain node is in communication with the origin operator network, the signaling log collector, and a blockchain and configured to:
validate the one or more credentials;
generate a blockchain transaction for the transmission invite;
generate a hash from the one or more credentials;
generate a smart contract for the transmission invite; and
transmit the smart contract to an additional blockchain node connected to a termination operator network.

2. The system of claim 1, wherein the signaling log collector and the blockchain node are installed on a cloud or at a premises associated with the origin operator network.

3. The system of claim 1 or 2, wherein generating the blockchain transaction comprises linking the one or more credentials to a digital wallet associated with the origin operator network.

4. The system of any preceding claim, wherein querying the origin operator network for the one or more credentials comprises querying the origin operator network for at least one of an origin phone number, a destination phone number, or a time stamp, and optionally wherein generating the hash from the one or more credentials comprises hashing the origin phone number and the destination phone number.

5. The system of any preceding claim, wherein the smart contract validates an identity of the origin operator network at the termination operator network using a digital wallet ID.

6. The system of any preceding claim, wherein the blockchain comprises an Algorand blockchain.

7. The system of any preceding claim, wherein the blockchain node comprises an application programming interface (API) configured to interact with a blockchain platform for accessing the blockchain.

8. A system for media transmission comprising:
a blockchain node in communication with a termination operator network and a blockchain and configured to:
receive a smart contract for a transmission invite from an additional blockchain node connected to an origin operator network; and
a signaling log collector, wherein the signaling log collector is in communication with the termination operator network and the blockchain node and configured to:
in response to the termination operator network receiving the transmission invite, query the termination operator network for one or more credentials associated with the transmission invite; and
push the one or more credentials to the blockchain node;
wherein the blockchain node is further configured to:
query the one or more credentials and the smart contract to identify one or more matching credentials;
update the smart contract with an acknowledgement indication; and
transmit the updated smart contract to the additional blockchain node.

9. The system of claim 8, wherein the signaling log collector and the blockchain node are installed on a cloud or at a premises associated with the termination operator network.

10. The system of claim 8 or 9, wherein querying the termination operator network for the one or more credentials comprises querying the termination operator network for at least one of an origin phone number, a destination phone number, or a time stamp.

11. The system of any of claims 8 to 10, wherein the smart contract validates an identity of the origin operator network at the termination operator network using a digital wallet ID.

12. The system of any of claims 8 to 11, wherein the blockchain comprises an Algorand blockchain.

13. The system of any of claims 8 to 12, wherein the blockchain node comprises an application programming interface (API) configured to interact with a blockchain platform for accessing the blockchain.

14. The system of claim 10, wherein the smart contract comprises a hash and querying the one or more credentials and the smart contract to identify the one or more matching credentials comprises inserting the hash into a header associated with the transmission invite,
and optionally wherein the hash is a first hash and the blockchain node is configured to:
hash the origin phone number and the destination phone number to generate a second hash; and
match the second hash to the first hash,
and further optionally wherein the blockchain node is configured to update the smart contract with a failure acknowledgement if a match is not identified within a predetermined time period after receiving the smart contract.

15. A computer-implemented method for validating a media transmission performed by a processor located at an origin operator network comprising:
receiving one or more credentials associated with a transmission invite from a signaling log collector;
validating the one or more credentials;
generating a blockchain transaction for the transmission invite;
generating a hash from the one or more credentials;
generating a smart contract for the transmission invite; and
transmitting the smart contract to a blockchain node connected to a termination operator network.
